# EUROPEAN PATENT SPECIFICATION

(11) **EP 2 101 576 B1**
(45) Date of publication and mention of the grant of the patent: **28.11.2012**
(21) Application number: 08706954.8
(22) Date of filing: 03.01.2008
(51) Int. Cl.: A01N 43/16, A01N 43/56, A01N 43/54, A01N 43/653, A01N 43/88, A01N 43/78, A01N 37/50, A01N 47/24, A01N 47/26, A01N 43/90, A01N 63/00

(54) **PESTICIDAL COMBINATIONS**
PESTIZIDKOMBINATIONEN
COMBINAISONS PESTICIDES

(30) Priority: 16.01.2007 US 885156 P; 16.02.2007 US 890226 P
(43) Date of publication of application: 23.09.2009
(73) Proprietor: Syngenta Participations AG, 4058 Basel (CH)
(72) Inventor: Weiss, Martin, CH-4058 Basel (CH); Brandl, Franz, CH-4058 Basel (CH)
(86) International application number: PCT/EP2008/000018
(87) International publication number: WO 2008/086948

(56) References cited:
- WO-A-00/04778
- WO-A-01/58262
- WO-A-01/58268
- WO-A-97/28150

## Description

The present invention relates to the use of a defined combination of pesticidal active ingredients, and compositions thereof, and methods for using such combinations in the control of plant growth and/or in the control or prevention of pathogenic and/or pest damage, in particular in a plant propagation material and plant organs that grow at a later point in time by applying the compound onto the plant propagation material.

Certain combinations of active ingredients for controlling pathogens and pests are described in the literature. The biological properties of those known combinations are not entirely satisfactory in the areas of pathogenic control, phytotoxicity, and environmental and worker exposure, for example. In particular, in the instance a pathogen has become, or risks becoming resistant to the previously known combinations, improved methods of control or prevention are sought.

The protection of plant propagation materials (especially seeds) with active ingredients are target applications which partially address the need for a reduction of environmental and worker exposure when used alone or in conjunction with foliar or in-furrow active ingredient applications.

There is a continuing need to provide pesticidal combinations, which provide improved properties, for example, biological properties and/or synergistic properties, especially for controlling plant growth and controlling pathogens and pests.

That need is solved according to the invention by the provision of the present pesticidal combination. Accordingly, in a first embodiment, the present invention provides a seed-applied pesticidal combination comprising at least two active ingredient components optionally together with one or more customary formulation auxiliaries, wherein component (I) comprises fludioxonil and component (II) is formononetin.

Examples of further optional pesticides useful in component (I) of the present invention include fungicides, insecticides, nematicides, acaracides and molluscicides. Also included are plant growth regulators and plant activators.

Examples of fungicides include azole fungicides, including benzimidazole fungicides, strobilurins, ortho-cyclopropyl-carboxanilide derivatives, phenylpyrroles, and other fungicides. Examples of fungicidally active ingredients include, but are not limited to, the following compounds, their salts and esters: azoxystrobin; benalaxyl; benalaxyl-M; benomyl; benzothiazole; bitertanol; boscalid; bluopyram; bixafen; captan; carbendazim; carboxin; carpropamide; chloroneb; Cu₂O; cymoxanil; cyproconazole; cyprodinil; dichlofluamid; difenoconazole; diniconazole; enestrobin; epoxiconazole; famoxadone; fenamidone; fenpiclonil; fluoxastrobin, fluquiconazole; flusilazole; flutoanil; flutriafol; focetyl-aluminium; fuberidazole; furalaxyl; guazatin; hexaconazole; hymexazol; imazalil; imibenconazole; iminoctadine triacetate; ipconazole; iprodione; kresoxim-methyl; mancozeb; maneb; metalaxyl; mefenoxam; metconazole; metominostrobin; myclobutanil; orysastrobin, oxadixyl; oxpoconazole; oxadixyl; pentachloronitrobenzene; pefurazoate; penconazole; pencycuron; picoxystrobin; prochloraz; propiconazole; prothioconazole; pyroquilone; pyrimethanil; pyraclostrobin; (±)-*cis*-1-(4-chlorophenyl)-2-(1*H*-1,2,4-triazol-1-yl)cycloheptanol; 5-chloro-7-(4-methylpiperidin-1-yl)-6-(2,4,6-trifluorophenyl)-[1,2,4]triazolo[1,5-a]pyrimidine; silthiofam; simeconazole; spiroxamin; tebuconazole; thiabendazole; thiophanate-methyl; thiram; tolclophos-methyl; tolifluamide; triazoxide; triadimefon; triadimenol; trifloxystrobin; triflumizole; triticonazole; uniconazole; a compound, including the salts and esters thereof, of the formula (AA) 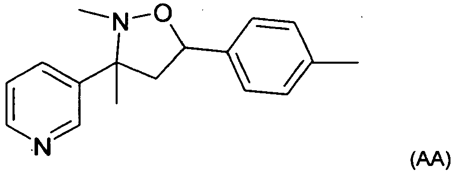 a compound, including the salts and esters thereof, of the formula (BB), 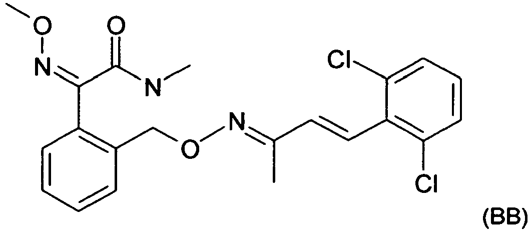 ortho-cyclopropyl-carboxanilide derivatives including, but are not limited to, compounds, salts, esters, stereoisomers, and mixtures of stereoisomers of formula I, represented by the formulae: 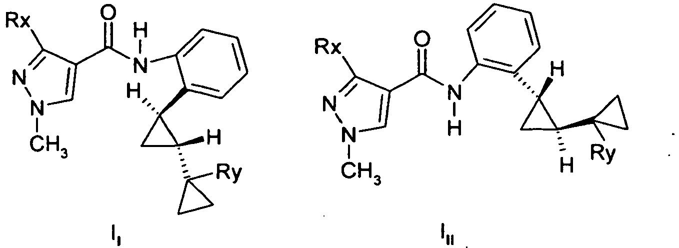 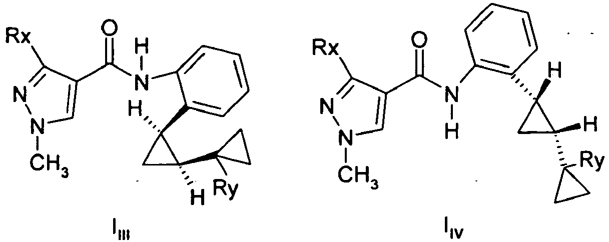 wherein
Rₓ is trifluoromethyl or difluoromethyl and
R_{y} is hydrogen or methyl; or a tautomer of such a compound, especially, among the ortho-cyclopropyl-carboxanilide derivatives, compounds wherein the content of racemic compounds represents a racemic mixture of compounds of formula I_{I}, wherein Rₓ is difluoromethyl and R_{y} is hydrogen, and compounds of formula I_{II}, wherein Rₓ is difluoromethyl and R_{y} is hydrogen, is from 65 to 99 % by weight; and a compound of formula CC

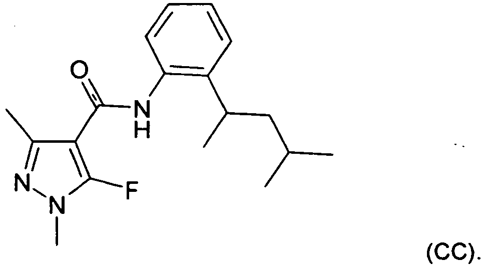

Examples of preferred fungicides include the following compounds and their salts and esters: azoxystrobin, enestrobin, trifloxystrobin, difenoconazole, fludioxonil, thiabendazole, tebuconazole, metalaxyl, mefenoxam, myclobutanil, fluoxastrobin, pyraclostobin, triticonazole, prothioconazole, ortho-cyclopropyl carboxamide derivatives of formulae I_{I} - I_{IV}, a compound of formula (AA), a compound of (BB), a compound of (CC), 5-chloro-7-(4-methylpiperidin-1-yl)-6-(2,4,6-trifluorophenyl)-[1,2,4]triazolo[1,5-a]pyrimidine, and picoxystrobin.

Examples of insecticides, acaricides, nematicides, and molluscicides are, for example and not for limitation, representatives of the following classes of active ingredients: organophosphorus compounds, nitrophenols and derivatives, formamidines, triazine derivatives, macrolides, nitroenamine derivatives, nitro- and cyanoguanidine derivatives, ureas, benzoylureas, carbamates, pyrethroids, chlorinated hydrocarbons and *Bacillus thuringiensis* products.

Examples of specific insecticides, acaracides, nematicides and molluscicides include abamectin; acephate; acetamiprid, acrinathrin; alanycarb; aldicarb, alpha-cypermethrin; alphamethrin; amitraz; azinphos A; azinphos-methyl; azocyclotin; bendiocarb; benfuracarb; bensultap; beta cyfluthrin; bifenthrin; brofenprox; bromophos A; bufencarb; buprofezin; butocarboxin; butylpyridaben; cadusafos; carbaryl; carbofuran; carbophenothion; carbosulfan; cartap; chloethocarb; chloranthraniliprole; chloroethoxyfos; chlorfenvenphos; chlorofluazuron; chloromephos; chloropyrifos; cis-res-methrin; clocythrin; clofentezin; clothianidin; cyanoimine; cyanophos; cycloprothrin; cyfluthrin; cyhexatin; deltamethrin; demeton M; demeton S; demeton-S-methyl; diafenthiuron; dibutylaminothio; dichlofenthion; dicliphos; diethion; diflubenzuron; dimethoate; dimethylvinphos; dinotefuran; dioxathion; doramectin; edifenphos; emamectin; endosulfan; esfenvalerate; ethiofencarb; ethion; ethiprole; ethofenprox; ethoprophos; etrimphos; fenamiphos; fenazaquin; fenbutatin oxide; fenitrothion; fenobucarb; fenothiocarb; fenoxycarb; fenpropathrin; fenpyrad; fenpyroximate; fenthion; fenvalerate; fipronil; fluazinam; flubendiamide; flucycloxuron; flucythrinate; flufenoxuron; flufenprox; fluxofenime; fonophos; formothion; fosthiazate; fubfenprox; gamma cyhalothrin; HCH; heptenophos; hexaflumuron; hexythiazox; imidacloprid; iprobenfos; isoprocarb; isoxathion; ivermectin, lambda cyhalothrin; lindane; lufenuron; malathion; mecarbam; mesulfenphos; metaldehyde; methamidophos; methiocarb; methomyl; metolcarb; mevinphos; milbemectin; milbemycin oxime; moxidectin; naled; NC 184; nitenpyram; nitromethylene; omethoate; oxamyl; oxydemethon M; oxydeprofos; parathion; parathion-methyl; permethrin; phenthoate; phorate; phosalone; phosmet; phoxim; pirimicarb; pirimiphos A; pirimiphos M; promecarb; propaphos; propoxur; prothiofos; prothoate; pymetrozine; pyrachlophos; pyrada-phenthion; pyresmethrin; pyrethrum; pyridaben; pyrimidifen; pyripfoxyfen; pyriproxyfen; rynaxypyr; salithion; sebufos; silafluofen; sulfotep; sulprofos; tebufenozide; tebufenpyrad; tebupirimphos; teflubenzuron; tefluthrin; temephos; terbam; terbufos; tetrachloro-vinphos; thiacloprid; thiafenox; thiamethoxam; thiodicarb; thiofanox; thionazin; thuringiensin; tralomethrin; triarthen; triazamate; triazophos; triazuron; trichlorofon; triflumuron; trimethacarb; vamidothion; xylylcarb; zeta-cypermethrin; zetamethrin; and *Bacillus thuringiensis (Bt)* products, including the salts and esters thereof.

Examples of preferred insecticides, acaracides, nematicides and molluscicides include abamectin, acetamiprid, aldacarb, beta cyfluthrin, carboxin, chloranthraniliprole, clothianidin, Bt products, dinotefuran, fipronil, imidacloprid, lambda cyhalothrin, nitenpyram, spinosad, tefluthrin, thiacloprid, thiamethoxam, and thiodicarb.

Examples of plant growth regulators include, but are not limited to antiauxins (clofibric acid, 2,3,5-tri-iodobenzoic acid), auxins (4-CPA, 2,4-D, 2,4-DB, 2,4-DEP, dichlorprop, fenoprop, IAA, IBA, naphthaleneacetamide, α-naphthaleneacetic acid, 1-naphthol, naphthoxyacetic acid, potassium naphthenate, sodium naphthenate, 2,4,5-T), cytokinins (2iP, benzyladenine, kinetin, zeatin), defoliants (calcium cyanamide, dimethipin, endothal; ethephon, merphos, metoxuron, pentachlorophenol, thidiazuron, tribufos), ethylene inhibitors (aviglycine, 1-methylcyclopropene), ethylene releasers (ACC, etacelasil, ethephon, glyoxime), gibberellins (gibberellic acid, gibberellins, including non-cyclopropene compounds that show gibberellin-like activity, such as, for example, helminthosporic acid, phaseolic acid, kaurenoic acid, and steviol), growth inhibitors (abscisic acid, ancymidol, butralin, carbaryl, chlorphonium, chlorpropham, dikegulac, flumetralin, fluoridamid, fosamine, glyphosine, isopyrimol, jasmonic acid, maleic hydrazide, mepiquat, piproctanyl, prohydrojasmon, propham, 2,3,5-tri-iodobenzoic acid), morphactins (chlorfluren, chlorflurenol, dichlorflurenol, flurenol), growth retardants/modifiers (chlormequat, daminozide, flurprimidol, mefluidide, paclobutrazol, cyproconazole, tetcyclacis, uniconazole, ancymidol, trinexapac-ethyl, and progexadione-CA), growth stimulators (brassinolide, forchlorfenuron, hymexazol, 2-amino-6-oxypurine derivatives, as described below, indolinone derivates, as described below, 3,4-disubstituted maleimide derivatives, as described below, and fused azepinone derivatives, as described below). The term additionally includes other active ingredients such as benzofluor, buminafos, carvone, ciobutide, clofencet, cloxyfonac, cyclanilide, cycloheximide, epocholeone, ethychlozate, ethylene, fenridazon, heptopargil, holosulf, inabenfide, karetazan, lead arsenate, methasulfocarb, prohexadione, pydanon, sintofen, triapenthenol, and trinexapac. Additional plant growth regulators include indolinone derivative plant stimulators described in WO 2005/107466; 3,4-disubstituted maleimide derivatives described in WO 2005/107465; fused azepinone derivatives described in WO 2005/107471; and 2-amino-6-oxypurine derivatives described in WO 2005/107472.

Examples of preferred plant growth regulators include growth retardants, the class of gibberellins, including gibberellic acid, growth inhibitors, and growth stimulators. Particularly preferred plant growth regulators include growth retardants, particularly paclobutrazol, cyproconazole, flurprimidol, trinexapac ethyl, and uniconazole and the class of gibberellins, including gibberellic acid, especially GA₃, GA₄ + GA₇, and the salt and ester forms thereof.

Examples of plant activators include, but are not limited to, acibenzolar-S-methyl, harpin protein, probenazole, and reynoutria sachalinensis extract (reysa). Preferred plant activators are acibenzolor-S-methyl and harpin protein.

Isoflavones are plant chemicals which occur largely in members of the Leguminosae plant family. They are based on a simple diphenolic ring structure as described for example by Carlson et al (1980) Journal of Chromotography, 198, 193-197 and US Patent No. 7033621. Examples of isoflavones include, but are not limited to, genistein, biochanin A, formononetin, daidzein, glycitein, hesperetin, naringenin, chalcone, coumarin, Ambiol (2-methyl-4-[dimethylaminomethyl]-5-hydroxybenzimidazole), ascorbate and pratensein and the salts and esters thereof.

In a second embodiment, the present invention provides a method of controlling plant growth or controlling or preventing pathogenic damage or pest damage in a plant propagation material, a plant, parts of a plant and/or plant organs that grow at a later point in time, which comprises applying on the plant, part of the plant, or surroundings thereof, the combination as defined in the first embodiment, in any desired sequence or simultaneously.

In a third embodiment, the present invention provides a method of protecting a plant propagation material, a plant, parts of a plant and/or plant organs that grow at a later point in time against pathogenic damage or pest damage by applying to the plant, parts of plant, or their surroundings the combination, as defined in the first embodiment, in any desired sequence or simultaneously.

The invention also relates to a plant propagation material treated with the combination defined in the first embodiment.

In a further embodiment, the present invention relates to a method which comprises (i) treating a plant propagation material, such as a seed, with a pesticidal combination as defined in the first embodiment, and (ii) planting or sowing the treated propagation material, wherein the combination protects against pathogenic damage or pest damage of the treated plant propagation material, parts of plant and/or plant grown from the treated propagation material.

Also, in another embodiment, the present invention relates to a method which comprises (i) treating a plant propagation material, such as a seed, with a pesticidal combination as defined in the first embodiment, and (ii) planting or sowing the treated propagation material, and (iii) achieving protection against pathogenic damage or pest damage of the treated plant propagation material, parts of plant and/or plant grown from the treated propagation material.

In a preferred embodiment of any aspect of the invention, each combination is a composition comprising, preferably one or more of each of, (I), (II), and optionally one or more customary formulation auxiliaries.

The components (I), (II) defined in the first embodiment are active ingredients for use in the agrochemical industry (also known as pesticides). A description of their structure as well as other pesticides (e.g., fungicides, insecticides, nematicides) can be found in the e-Pesticide Manual, version 3.1, 13th Edition, Ed. CDC Tomlin, British Crop Protection Council, 2004-05.

Controlling, preventing or protecting and its inflections, within the context of the present invention, mean reducing any undesired effect, such as
- pathogenic, such as phytopathogenic, especially fungi, infestation or attack of, and
- pathogenic damage or pest damage on,
a plant, part of the plant or plant propagation material to such a level that an improvement is demonstrated.

Controlling plant growth, within the context of the present invention, means promoting or delaying seed germination, including promoting or delaying germination in a method to synchronize emergence and/or flowering of the plant; achieving plants with thicker stems and/or smaller canopies; and achieving plants which require less input requirements such as water, fertilizer, light, and the like.

The pesticidal combinations according to the invention have very advantageous properties for protecting plants against (i) pathogenic, such as phytopathogenic, especially fungi, attack or infestation, which result in a disease and damage to the plant and/or (ii) pest attack or damage; particularly in the instance of plants, the present invention can control or prevent pathogenic damage and/or pest damage on a seed, parts of plant and/or plant grown from the treated seed. Additionally, the pesticidal combinations according to the present invention have very advantageous properties for controlling emergence and growth of plants and/or seeds.

These properties are for example the enhanced action of combinations of one or more of compounds (I), (II), resulting in lower pathogenic damage and/or pest damage, lower rates of application, and/or a longer duration of action. In the instance of agriculture, the enhanced action is found to show an improvement in the growing characteristics of a plant by, for example, delayed emergence and/or higher than expected control of the pathogenic infestation and/or pest damage.

The improvement in the growing (or growth) characteristics of a plant can manifest in a number of different ways, but ultimately it results in a better product of the plant. It can, for example, manifest in improving the yield and/or vigour of the plant or quality of the harvested product from the plant, which improvement may or may not be connected to the control of diseases and/or pests.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1%, even more preferred is about 2%, and yet more preferred is about 4%, or more. Yield can be expressed in terms of an amount by weight or volume of a product of the plant on some basis, or by amount of marketable produce, and quality of such produce. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

Accordingly, the present invention also provides a method of improving the growing characterictics of a plant, which comprises applying to the plant, and/or parts of plant, the combination, as defined in the first aspect, in any desired sequence or simultaneously.

In Table 1 for example, azoxystrobin is compound A1, gibberellic acid is compound C6, formononetin is compound E3, and so forth.

**Table 1**

| | **Fungicide (A)** | **Nematicide or Insecticide (B)** | **PGR (C)** | **Activator (D)** | **Isoflavone (E)** |
|---|---|---|---|---|---|
| 1 | Azoxystrobin | Abamectin | Paclobutrazol | Acibenzolar-s-methyl | Formononetin |
| 2 | Difenoconazole | Thiacloprid | Cyproconazole | Harpin protein | Genistein |
| 3 | Fludioxonil | Thiamethoxam | Trinexapac ethyl | | |
| 4 | Fluoxastrobin | Thiodicarb | Uniconazole | | |
| 5 | Mefenoxam | Tefluthrin | Gibberellic Acid | | |
| 6 | Metalaxyl | Clothianidin | GA₃ | | |
| 7 | thiram | *Bt* products | GA₄ + GA₇ | | |
| 8 | triticonazole | Spinosad | | | |
| 9 | Tebuconazole | Fipronil | | | |
| 10 | Thiabendazole | Imidacloprid | | | |
| 11 | Trifloxystrobin | Lambda cyhalothrin | | | |
| 12 | ortho-cyclopropyl-carboxanilide of formula I | | | | |
| 13 | pyraclostrobin | | | | |
| 14 | Compound of formula (CC) | | | | |
| 15 | Prothioconazole | | | | |

Accordingly, the following preferred specific 3-, 4- and 5-way combinations are provided using the designations provided above in Table 1 and those provided in Table 2, where only combinations containing A3 + E1 are covered by the present invention.

**Table 2**

| | | | |
|---|---|---|---|
| Z1 | (A5 + A6) + (A3 or A7) | Z12 | (A3 or A7) + (A8, A9 or A15) |
| Z2 | Z1 + (A1, A4, A11, or A13) | Z13 | Z1+ (A8, A9, or A15) |
| Z3 | Z2 + A10 | Z14 | Z1 + (A12 or A14) |
| Z4 | Z1 + A2 | Z15 | Z2 + (A12 or A14) |
| Z5 | Z2 + A2 | Z16 | (A1, A4, A11, or A13) + (A12 or A14) |
| Z6 | A2 + (A3 or A7) | Z17 | (A1, A4, A11, or A13) + (A8, A9 or A15) |
| Z7 | (A1, A4, A11, or A13) + A2 | Z18 | Z1 + (A8, A9, or A15) |
| Z8 | A2 + (A5 or A6) | Z19 | Z2 + (A8, A9, or A15) |
| Z9 | (A1, A4, A11, or A13) + (A5 or A6) | Z20 | Z1 + A10 |
| Z10 | Z2 + (A12 or A14) | Z21 | (A1, A4, A11, or A13) + A10 |
| Z11 | Z1 + (A12 or A14) | | |

Z1 + B1 + E1; Z1 + B1 + E2; Z1 + B2 + E1; Z1 + B2 + E2; Z1 + B3 + E1; Z1 + B3+ E2; Z1 + B4 + E1; Z1 + B4 + E2; Z1 + B5 + E1; Z1 + B5 + E2; Z1 + B6 + E1; Z1 + B6+ E2; Z1 + B7 + E1; Z1 + B7 + E2; Z1 + B8 + E1; Z1 + B8 + E2; Z1 + B9 + E1; Z1 + B9 + E2; Z1+ B10 + E1; Z1 + B10 + E2; Z1 + B11 + E1; Z1 + B11 + E2; Z2 + B1 + E1; Z2 + B1 + E2; Z2 + B2 + E1 ; Z2 + B2 + E2; Z2 + B3 + E1; Z2 + B3 + E2; Z2 + B4 + E1; Z2 + B4 + E2; Z2 + B5+ E1; Z2 + B5 + E2; Z2 + B6 + E1; Z2 + B6 + E2; Z2 + B7 + E1; Z2 + B7 + E2; Z2 + B8 + E1; Z2 + B8 + E2; Z2 + B9 + E1; Z2 + B9 + E2; Z2 + B10 + E1; Z2 + B10 + E2; Z2 + B11 + E1; Z2 + B11+ E2; Z3 + B1 + E1; Z3 + B1 + E2; Z3 + B2 + E1; Z3 + B2 + E2; Z3 + B3 + E1; Z3 + B3 + E2; Z3 + B4 + E1; Z3 + B4 + E2; Z3 + B5 + E1; Z3 + B5 + E2; Z3 + B6 + E1; Z3 + B6 + E2; Z3 + B7 + E1; Z3 + B7 + E2; Z3 + B8 + E1; Z3 + B8 + E2; Z3 + B9 + E1; Z3 + B9 + E2; Z3 + B10+ E1; Z3 + B10 + E2; Z3 + B11 + E1; Z3 + B11 + E2; Z4 + B1 + E1; Z4 + B1 + E2; Z4 + B2+ E1; Z4 + B2 + E2; Z4 + B3 + E1; Z4 + B3 + E2; Z4 + B4 + E1; Z4 + B4 + E2; Z4 + B5 + E1; Z4+ B5 + E2; Z4 + B6 + E1; Z4 + B6 + E2; Z4 + B7 + E1; Z4 + B7 + E2; Z4 + B8 + E1; Z4 + B8+ E2; Z4 + B9 + E1; Z4 + B9 + E2; Z4 + B10 + E1; Z4 + B10 + E2; Z4 + B11 + E1; Z4 + B11+ E2; Z5 + B1 + E1; Z5 + B1 + E2; Z5 + B2 + E1; Z5 + B2 + E2; Z5 + B3 + E1; Z5 + B3 + E2; Z5 + B4 + E1; Z5 + B4 + E2; Z5 + B5 + E1; Z5 + B5 + E2; Z5 + B6 + E1; Z5 + B6 + E2; Z5 + B7 + E1; Z5 + B7 + E2; Z5 + B8 + E1; Z5 + B8 + E2; Z5 + B9 + E1; Z5 + B9 + E2; Z5 + B10+ E1; Z5 + B10 + E2; Z5 + B11 + E1; Z5 + B11 + E2; Z6 + B1 + E1; Z6 + B1 + E2; Z6 + B2+ E1; Z6 + B2 + E2; Z6 + B3 + E1; Z6 + B3 + E2; Z6 + B4 + E1; Z6 + B4 + E2; Z6 + B5 + E1; Z6+ B5 + E2; Z6 + B6 + E1; Z6 + B6 + E2; Z6 + B7 + E1; Z6 + B7 + E2; Z6 + B8 + E1; Z6 + B8+ E2; Z6 + B9 + E1; Z6 + B9 + E2; Z6 + B10 + E1; Z6 + B10 + E2; Z6 + B11 + E1; Z6 + B11+ E2; Z7 + B1 + E1; Z7 + B1 + E2; Z7 + B2 + E1; Z7 + B2 + E2; Z7 + B3 + E1; Z7 + B3 + E2; Z7 + B4 + E1; Z7 + B4 + E2; Z7 + B5 + E1; Z7 + B5 + E2; Z7 + B6 + E1; Z7 + B6 + E2; Z7 + B7 + E1; Z7 + B7 + E2; Z7 + B8 + E1; Z7 + B8 + E2; Z7 + B9 + E1; Z7 + B9 + E2; Z7 + B10+ E1; Z7 + B10 + E2; Z7 + B11 + E1; Z7 + B11 + E2; Z8 + B1 + E1; Z8 + B1 + E2; Z8 + B2+ E1; Z8 + B2 + E2; Z8 + B3 + E1; Z8 + B3 + E2; Z8 + B4 + E1; Z8 + B4 + E2; Z8 + B5 + E1; Z8+ B5 + E2; Z8 + B6 + E1; Z8 + B6 + E2; Z8 + B7 + E1; Z8 + B7 + E2; Z8 + B8 + E1; Z8 + B8+ E2; Z8 + B9 + E1; Z8 + B9 + E2; Z8 + B10 + E1; Z8 + B10 + E2; Z8 + B11 + E1; Z8 + B11+ E2; Z9 + B1 + E1; Z9 + B1 + E2; 29 + B2 + E1; Z9 + B2 + E2; Z9 + B3 + E1; Z9 + B3 + E2; 29 + B4 + E1; Z9 + B4 + E2; Z9 + B5 + E1; Z9 + B5 + E2; Z9 + B6 + E1; Z9 + B6 + E2; Z9 + B7 + E1; Z9 + B7 + E2; Z9 + B8 + E1; Z9 + B8 + E2; Z9 + B9 + E1; Z9 + B9 + E2; Z9 + B10+ E1; Z9 + B10 + E2; Z9 + B11 + E1; Z9 + B11+ E2; Z10 + B1 + E1; Z10 + B1 + E2; Z10+ B2 + E1; Z10 + B2 + E2; Z10 + B3 + E1; Z10 + B3 + E2; Z10 + B4 + E1; Z10 + B4 + E2; Z10 + B5+ E1; Z10 + B5 + E2; Z10 + B6 + E1; Z10 + B6 + E2; Z10 + B7 + E1; Z10 + B7 + E2; Z10 + B8+ E1; Z10 + B8 + E2; Z10 + B9 + E1; Z10 + B9 + E2; Z10 + B10 + E1; Z10 + B10 + E2; Z10+ B11 + E1; Z10 + B11 + E2; Z11 + B1 + E1; Z11 + B1 + E2; Z11 + B2 + E1; Z11 + B2+ E2; Z11 + B3 + E1; Z11 + B3 + E2 ; Z11 + B4 + E1; Z11 + B4 + E2; Z11 + B5 + E1; Z11 + B5 + E2; Z11 + B6 + E1; Z11 + B6 + E2; Z11 + B7 + E1; Z11 + B7 + E2; Z11 + B8 + E1; Z11 + B8 + E2; Z11 + B9 + E1; Z11 + B9 + E2; Z11 + B10 + E1; Z11 + B10 + E2; Z11 + B11 + E1; Z11 +B11 + E2; Z12 + B1 +E1; Z12 + B1 + E2; Z12 + B2 + E1; Z12 + B2 + E2; Z12 + B3 + E1; Z12 + B3+ E2; Z12 + B4 + E1; Z12 + B4 + E2; Z12 + B5 + E1; Z12 + B5 + E2; Z12 + B6 + E1; Z12 + B6+ E2; Z12 + B7 + E1; Z12 + B7 + E2; Z12 + B8 + E1; Z12 + B8 + E2; Z12 + B9 + E1; Z12 + B9 + E2; Z12 + B10 + E1; Z12 + B10 + E2; Z12 + B11 + E1; Z12 + B11 + E2; Z13 + B1 + E1; Z13 + B1 + E2; Z13 + B2 + E1; Z13 + B2 + E2; Z13 + B3 + E1; Z13 + B3 + E2; Z13 + B4 + E1; Z13+ B4 + E2; Z13 + B5 + E1; Z13 + B5 + E2; Z13 + B6 + E1; Z13 + B6 + E2; Z13 + B7 + E1; Z13+ B7 + E2; Z13 + B5 + E1; Z13 + B8 + E2; Z13 + B9 + E1; Z13 + B9 + E2; Z13 + B10 + E1; Z13+ B10 + E2; Z13 + B11 + E1; Z13 + B11 + E2; Z14 + B1 + E1; Z14 + B1 + E2; Z14 + B2 + E1; Z14 + B2 + E2; Z14 + B3 + E1; Z14 + B3 + E2; Z14 + B4 + E1; Z14 + B4 + E2; Z14 + B5+ E1; Z14 + B5 + E2; Z14 + B6 + E1; Z14 + B6 + E2; Z14 + B7 + E1; Z14 + B7 + E2; Z14 + B8+ E1; Z14 + B8 + E2; Z14 + B9 + E1; Z14 + B9 + E2; Z14 + B10 + E1; Z14 + B10 + E2; Z14 + B11 + E1; Z14 + B11 + E2; Z15 + B1 + E1; Z15 + B1 + E2; Z15 + B2 + E1; Z15 + B2+ E2; Z15 + B3 + E1; Z15 + B3 + E2; Z15 + B4 + E1; Z15 + B4 + E2; Z15 + B5 + E1; Z15 + B5 + E2; Z15 + B6 + E1; Z15 + B6 + E2; Z15 + B7 + E1; Z15 + B7 + E2; Z15 + B8 + E1; Z15 + B8 + E2; Z15 + B9 + E1; Z15 + 89 + E2; Z15 + B10 + E1; Z15 + B10 + E2; Z15 + B11 + E1; Z15 + B11 + E2; Z16 + B1 +E1; Z16 + B1 + E2; Z16 + B2 + E1; Z16 + B2 + E2; Z16 + B3 + E1; Z16 + B3 + E2; Z16 + B4 + E1; Z16 + B4 + E2; Z16 + B5 + E1; Z16 + B5 + E2; Z16 + B6 + E1; Z16 + B6+ E2; Z16 + B7 + E1; Z16 + B7 + E2; Z16 + B8 + E1; Z16 + B8+ E2; Z16 + B9 + E1; Z16 + B9+ E2; Z16 + B10 + E1; Z16 + B10 + E2; Z16 + B11 + E1; Z16 + B11 + E2; Z17 + B1 + E1; Z17 + B1 +E2; Z17 + B2 + E1; Z17 + B2 + E2; Z17 + B3 + E1; Z17 + B3 + E2; Z17 + B4 + E1; Z17+ B4 + E2; Z17 + B5 + E1; Z17 + B5 + E2; Z17 + B6 + E1; Z17 + B6 + E2; Z17 + B7 + E1; Z17+ B7 + E2; Z17 + B8 + E1; Z17 + B8 + E2; Z17 + B9 + E1; Z17 + B9 + E2; Z17 + B10 + E1; Z17+ B10 + E2; Z17 + B11 + E1; Z17 + B11 + E2; Z18 + B1 + E1; Z18 + B1 + E2; Z18 + B2+ E1; Z18 + B2 + E2; Z18 + B3 + E1; Z18 + B3 + E2; Z18 + B4 + E1; Z18 + B4 + E2; Z18 + B5+ E1; Z18 + B5 + E2; Z18 + B6 + E1; Z18 + B6 + E2; Z18 + B7 + E1; Z18 + B7 + E2; Z18 + B8+ E1; Z18 + B8 + E2; Z18 + B9 + E1; Z18 + B9 + E2; Z18 + B10 + E1; Z18 + B10 + E2; Z18 + B11 + E1; Z18 + B11 + E2; Z19 + B1 + E1; Z19 + B1 + E2; Z19 + B2 + E1; Z19 + B2 + E2 ; Z19 + B3 + E1; Z19 + B3 + E2; Z19 + B4 + E1; Z19 + B4 + E2; Z19 + B5 + E1; Z19 + B5 + E2; Z19 + B6 + E1; Z19 + B6 + E2; Z19 + B7 + E1; Z19 + B7 + E2; Z19 + B8 + E1; Z19 + B8 + E2; Z19 + B9 + E1; Z19 + B9 + E2; Z19 + B10 + E1; Z19 + B10 + E2; Z19 + B11 + E1; Z19 + B11 + E2; Z20 + B1 + E1; Z20 + B1 + E2; Z20 + B2 + E1; Z20 + B2 + E2; Z20 + B3 + E1; Z20 + B3+ E2; Z20 + B4 + E1; Z20 + B4 + E2; Z20 + B5 + E1; Z20 + B5 + E2; Z20 + B6 + E1; Z20 + B6 + E2; Z20 + B7 + E1; Z20 + B7 + E2; Z20 + B8 + E1; Z20 + B8 + E2; Z20 + B9 + E1; Z20 + B9 + E2; Z20 + B10 + E1; Z20 + B10 + E2; Z20 + B11 + E1 ; Z20 + B11 + E2; Z21 + B1 + E1; Z21 + B1 + E2; Z21 + B2 + E1; Z21 + B2 + E2; Z21 + B3 + E1; Z21 + B3 + E2; Z21 + B4 + E1 ; Z21 + B4 + E2; Z21 + B5 + E1; Z21 + B5 + E2; Z21 + B6 + E1; Z21 + B6 + E2; Z21 + B7+E1; Z21 + B7 + E2; Z21 + B8 +E1; Z21 + B8 + E2; Z21 + B9 + E1; Z21 + B9 + E2; Z21 + B10+ E1; Z21 + B10 + E2; Z21 + B11 + E1; Z21 + B11 + E2;

Each of the combinations of the invention can be used in the agricultural sector and related fields of use for controlling growth and/or controlling or preventing disease infestation and/or pest damage on plants.

Each of the combinations according to the present invention that comprises a fungicide is effective against phytopathogenic fungi, especially occurring in plants, including seedborne fungi and belong to the following classes: Ascomycetes (e.g. Penicillium, Gaeumannomyces graminis); Basidiomycetes (e.g. the genus Hemileia, Rhizoctonia, Puccinia); Fungi imperfecti (e. g. Botrytis, Helminthosporium, Rhynchosporium, Fusarium, Septoria, Cercospora, Cladosporium, Colletotrichum, Alternaria, Pyricularia and Pseudocercosporella herpotrichoides); Oomycetes (e. g. Phytophthora, Peronospora, Bremia, Pythium, Plasmopara, Pseudoperonospora); Zygomycetes (e.g., Rhizopus spp.). A combination is especially effective against Alternaria spp., Aspergillus spp., Claviceps purpurea, Cochliobolus spp., Colletotrichum spp., Diplodia maydis, Erysiphe graminis, Fusarium spp. (such as Fusarium culmorum, Fusarium oxysporium, Fusarium solani, Fusarium graminearum and Fusarium moniliforme), Gaeumannomyces graminis, Giberella fujikuroi, Giberella zeae, Helminthosporium graminearum, Monographella nivalis, Puccinia spp., Pyrenophora spp. (such as Pyrenophora graminea), Peronosclerospora spp., Peronspora spp., Phakopsora pachyrhizi, Phythium spp., Phoma spp., Phomopsis spp., Rhizoctonia solani, Septoria spp., Pseudocercosporella spp., Tilletia spp., Rhizopus spp., Typhula spp., Ustilago spp., Sphacelotheca spp. (e.g. Spacelotheca reilliani), Thanatephorus cucumeris, and Verticillium spp..

The combinations of the present invention comprising at least one fungicide are particularly effective against fungal pathogens of the genus *Fusarium, Pythium* and/or *Rhizoctonia.*

The combinations of the invention comprising at least one of an insecticide, nematicide, acaracide or mulluscicide compound (I) (such as abamectin, clothianidin, imidacloprid, thiamethoxam, tefluthrin, lambda-cyhalothrin) is effective for control of pests. In that instance, the combination can also be applied on the pest to control or prevent pest damage and protect the desired material (e.g. plant and parts of plant) from pest damage. Examples of pests include:
from the order Lepidoptera, for example, Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia spp., Cryptophlebia leucotreta, Crysodeixis includens, Cydia spp., Diatraea spp., Diparopsis castanea, Earias spp., Elasmopalpus spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
from the order Coleoptera, for example, Agriotes spp., Anthonomus spp., Atomaria linearis, Ceutorhynchus spp., Chaetocnema tibialis, Cosmopolites spp., Curculio spp., Dermestes spp., Diabrotica spp., Epilachna spp., Eremnus spp., Gonocephalum spp., Heteronychus spp., Leptinotarsa decemlineata, Lissorhoptrus spp., Melolontha spp., Orycaephilus spp., Otiorhynchus spp., Phlyctinus spp., Phyllotreta spp., Popillia spp., Protostrophus spp., Psylliodes spp., Rhizopertha spp., Scarabeidae, Sitophilus spp., Sitotroga spp., Tenebrio spp., Tribolium spp. and Trogoderma spp.;
from the order Orthoptera, for example, Blatta spp., Blattella spp., Gryllotalpa spp., Leucophaea maderae, Locusta spp., Periplaneta spp. and Schistocerca spp.;
from the order Isoptera, for example, Reticulitermes spp.;
from the order Psocoptera, for example, Liposcelis spp.;
from the order Anoplura, for example, Haematopinus spp., Linognathus spp., Pediculus spp., Pemphigus spp. and Phylloxera spp.;
from the order Mallophaga, for example, Damalinea spp. and Trichodectes spp.;
from the order Thysanoptera, for example, Frankliniella spp., Hercinothrips spp., Taeniothrips spp., Thrips palmi, Thrips tabaci and Scirtothrips aurantii;
from the order Heteroptera, for example, Dichelops melacanthus, Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
from the order Homoptera, for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
from the order Hymenoptera, for example, Acromyrmex, Athalia rosae, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.;
from the order Diptera, for example, Antherigona soccata, Bibio hortulanus, , Ceratitis spp., Chrysomyia spp., Culex spp., Cuterebra spp., Dacus spp., Delia spp., Drosophila melanogaster, , Liriomyza spp., , Melanagromyza spp., , Orseolia spp., Oscinella frit, Pegomyia hyoscyami, Phorbia spp., Rhagoletis pomonella, Sciara spp.,;
from the order Acarina, for example, Acarus siro, Aceria sheldoni, Aculus schlechtendali, Amblyomma spp., Argas spp., , Brevipalpus spp., Bryobia praetiosa, Calipitrimerus spp., Chorioptes spp., Dermanyssus gallinae, Eotetranychus carpini, Eriophyes spp., Hyalomma spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. and Tetranychus spp.; and
from the class Nematoda, for example, the species of Meloidogyne spp. (for example, Meloidogyne incoginita and Meloidogyne javanica), Heterodera spp. (for example, Heterodera glycines, Heterodera schachtii, Heterodora avenae and Heterodora trifolii), Globodera spp. (for example, Globodera rostochiensis), Radopholus spp. (for example, Radopholus similes), Rotylenchulus spp., Pratylenchus spp. (for example, Pratylenchus neglectans and Pratylenchus penetrans), Aphelenchoides spp., Helicotylenchus spp., Hoplolaimus spp., Paratrichodorus spp., Longidorus spp., Nacobbus spp., Subanguina spp. Belonlaimus spp., Criconemella spp., Criconemoides spp. Ditylenchus spp., Dolichodorus spp., Hemicriconemoides spp., Hemicycliophora spp., Hirschmaniella spp., Hypsoperine spp., Macroposthonia spp., Melinius spp., Punctodera spp., Quinisulcius spp., Scutellonema spp., Xiphinema spp., and Tylenchorhynchus spp.

It is also found in a further aspect of the present invention that a combination comprising (i) thiabendazole and (ii) abamectin and/or a neonicotinoid pesticide, such as thiamethoxam, imidacloprid or clothianidin, is particularly well suited for control of pathogenic and pest damage, in particular in a soybean crop. The combination is effective against nematode pests, in particular when the combination is applied onto a plant propagation material, such as a seed. A preferred combination comprises (i) thiabendazole and (ii) abamectin, and/or (iii) thiamethoxam as component (I) and at least Formononetin or Genistein, in either naturally-occuring or synthetic form, as component (II).

The combinations of the invention can be formulated for a particular use. Preferably, the combination is formulated for protecting cultivated plants or their propagation materials. Accordingly, a combination of the invention can be applied to the plant in a conventional manner, such as foliar spray. Advantageously, the combinations are formulated for seed treatment applications for controlling or preventing damage by pests and/or pathogens, which are found in agriculture and forestry, and can particularly damage the plant in the early stages of its development.

Further, the present invention also envisages soil application of the combinations of the invention to control the soil-dwelling pests and/or soil-borne pathogens. Methods of applying to the soil can be via any suitable method, which ensures that the combination penetrates the soil, for example, nursery tray application, in furrow application, soil drenching, soil injection, drip irrigation, application through sprinklers or central pivot, incorporation into soil (broad cast or in band) are such methods.

The benefit from the invention can also be achieved either by (a) treating plant propagation material with the combinaton or (b) applying to the locus where control is desired, generally the planting site, the combination, or both (a) and (b).

The term "plant propagation material" is understood to denote all the generative parts of the plant, such as seeds, which can be used for the multiplication of the latter and vegetative plant material such as cuttings and tubers (for example, potatoes). Accordingly, as used herein, part of a plant includes propagation material. There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant and plant organs that grow at later point in time are any sections of a plant that develop from a plant propagation material, such as a seed. Parts of plant, plant organs, and plants can also benefit from the pathogenic and/or pest damage protection achieved by the application of the combination on to the plant propagation material. In an embodiment, certain parts of plant and certain plant organs that grow at later point in time can also be considered as plant propagation material, which can themselves be applied (or treated) with the combination; and consequently, the plant, further parts of the plant and further plant organs that develop from the treated parts of plant and treated plant organs can also benefit from the pathogenic and/or pest damage protection achieved by the application of the combination on to the certain parts of plant and certain plant organs.

Methods for applying or treating pesticidal active ingredients and mixtures thereof on to plant propagation material, especially seeds, are known in the art, and include dressing, coating, pelleting and soaking application methods of the propagation material.

The active ingredients can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In a preferred embodiment, the combination is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, are seed dressing, seed coating or seed pelleting and the like.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the active ingredients and adherence thereof to the seeds is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

An aspect of the present invention includes application of the active ingredients onto the plant propagation material in a targeted fashion, including positioning the active ingredients onto the entire plant propagation material or on only parts thereof, including on only a single side or a portion of a single side. One of ordinary skill in the art would understand these application methods from information known in the art and from the description provided in EP954213B1 and WO06112700.

Application of the combinations described herein onto plant propagation material also includes protecting the plant propagation material treated with the combination of the present invention by placing one or more pesticide-containing particles next to a pesticide-treated seed, wherein the amount of pesticide is such that the pesticide-treated seed and the pesticide-containing particles together contain an Effective Dose of the pesticide and the pesticide dose contained in the pesticide-treated seed is less than or equal to the Maximal Non-Phytotoxic Dose of the pesticide. Such techniques are known in the art, particularly in WO2005/120226.

Application of the combinations of active ingredients onto the seed also includes controlled release coatings on the seeds, wherein the active compounds are incorporated into materials that release the active compounds over time. Examples of controlled release seed treatment technologies are generally known in the art and include polymer films, waxes, or other seed coatings, wherein the active compounds may be incorporated into the controlled release material or applied between layers of materials, or both.

Seed can be treated by applying thereto the at least one active ingredients of component (I) and at least one component (II) in any desired sequence or simultaneously.

The seed treatment occurs to an unsown seed, and the term "unsown seed" is meant to include seed at any period between the harvest of the seed and the sowing of the seed in the ground for the purpose of germination and growth of the plant. Included in the definition of this term is the treatment of the seed during the sowing process.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the combination. In particular, seed coating or seed pelleting are preferred in the treatment of the combinations according to the invention. As a result of the treatment, the active ingredients in the combination are adhered on to the seed and therefore available for pest and/or disease control.

The treated seeds can be stored, handled, sowed and tilled in the same manner as any other active ingredient treated seed.

The combination according to the present invention is suitable for plants of the crops: cereals (wheat, barley, rye, oats, corn, sweet corn, rice, sorghum, triticale and related crops); beet (sugar beet and fodder beet, beet root); leguminous plants (beans, lentils, peas, soybeans, alfalfa, clover, peanuts); oil plants (rape, mustard, sunflowers, canola); cucumber plants (marrows, cucumbers,pumpkins, melons, gourds, zucchini); fibre plants (cotton, flax, hemp, jute); vegetables (spinach, lettuce, endive, cress, corn salad, asparagus, cabbages, cauliflower, brussels sprout, broccoli, Kale, Rapini, Bok choy, Kailan, Komatsuna, Mizuna greens, celeriac,celery, leeks, carrots, onions, tomatoes, peppers (bell and chilli) potatoes, paprika, egg plants); as well as ornamentals (flowers, shrubs, broad-leaved trees and evergreens, such as conifers) and herbs (basil, oregano, parsley, thyme). Especially suitable are wheat, cotton, canola, sunflowers, barley, rye, oats, triticale, sugar beet, lettuce, cauliflower, cabbage, corn, and soybean; each combination is advantageously preferred for the crops corn and soybean, most advantageously for soybean.

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878.

The plant propagation material treated by a combination of the present invention are, therefore, resistant to disease and/or pest damage; accordingly, the present invention also provides a pathogenic and/or pest resistant plant propagation material which is treated with the combination and consequently at least the active ingredients thereof are adhered on the propagation material, such as seed.

In a preferred embodiment of the invention, soybean seeds and transgenic soybean seeds are treated with the combinations of the present invention. In addition, the soybean seeds may be inoculated with an appropriate strain of nitrogen-fixing bacteria for the purpose of promoting plant growth. Preferably, seeds may be inoculated with an effective bacterial strain such as Rhizobium spp. or Azospirillium spp. before sowing. The primary effect of such bacteria is in the fixation of atmospheric nitrogen into a useable form for the plant. Rhizobia bacteria, for example, is especially preferred in order to form nodules on the plant roots that are sustained by the plant and in turn provide nitrogen for the plant as mentioned above.

In a further embodiment, a soybean plant propagation material is treated with a plant inducer, e.g. a nod factor derived from Bradyrhizobium japonicum, Sinorhizobium fredii, Sinorhizobium meliloti, Bradyrhizobium sp. (Arachis), or Rhizobium leguminosarum biovar phaseoli, viceae, or trifolii.

In an aspect, the present invention also envisages use of the combinations of the present invention with glyphospate tolerant plants, especially glyphospate tolerant soybean plants, in particular for the control of asian soybean rust. Accordingly, the present invention provides a method comprising (a) applying a combination (A) to a glyphosate tolerant plant propagation material, preferably soybean propagation material, and (b) applying a pesticidal composition (B) to the resulting plant, part of plant and/or the locus thereof one or more times (i) before emergence, (ii) after emergence, or (iii) both (i) and (ii), provided that combination (A) comprises (I) and (II) as defined in the first embodiment of the present invention; and pesticide composition (B) comprises glyphosate.

Generally, glyphosate-containing composition can be applied, if applied only once, at a rate of 960 g ae/ha; if applied twice the rate can vary from 1200 to 1680 g ae/ha. The rates and number of applications vary according to the particular conditions. Preferably, the composition (B) is applied three times with an application rate of 960, 720 and 400 g ae/ha respectively.

In an embodiment, the present invention controls, prevents or treats *Phakopsora pachyrhizi* and/or *P. meibomiae,* especially *Phakopsora pachyrhizi.*

The combinations of the present invention may also comprise alkali metal, alkaline earth metal, metal, or ammonium salts. Zinc chloride and alkali metal, alkaline earth metal, or ammonium salts of mineral acids, especially nitrates, phosphates, sulfates, chlorides, and carbonates of sodium, potassium, ammonium, magnesium, and calcium are preferred.

The combinations of the present invention may additionally comprise micronutrients to aid in the nourishment and health of the plant and/or plant propagation material. Suitable micronutrients include, but are not limited to, chlorine (CI), zinc (ZN), boron (B), copper (Cu), iron (Fe), manganese (Mn) or molybdenum (Mo). Micronutrients may be supplied in chelate form.

Depending upon the particular plant propagation material to be treated, the conditions under which it is to be stored, and the soil and weather conditions under which it is expected to germinate and grow, the combinations of the present invention may include a wide spectrum of one or more additives. Such additives include, but are not limited to, uv-protectants, pigments, dyes, extenders such as flour, dispersing agents, excipients, anti-freezing agents, preservatives, herbicidal safeners, seed safeners, seed conditioners, micronutients, fertilizers, biocontrol agents, surfactants, sequestering agents, plasticizers, colorants, brighteners, emulsifiers, flow agents such as calcium stearate, talc and vermiculite, coalescing agents, defoaming agents, humectants, thickeners, waxes, bactericides, insecticides, pesticides, and fillers such as cellulose, glass fibers, clay, kaolin, talc, pulverized tree bark (e.g., Douglas fir bark or alderbark), calcium carbonate and wood meal, and odor-modifying agents. Typical excipients include finely divided mineral substances such as pumice, attapulgite, bentonite, kaoline zeolite, diatomite, and other clays, modified diatomaceous adsorbents, charcoal, vermiculite, finely divided organic substances such as peat moss, wood powder, and the like. Such additives are commercially available and known in the art.

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity. Furthermore a fungicide may also have growth regulatory effects, e.g., tebuconazole (and other triazoles) are known to show PGR effects.

The weight ratio of active ingredient compounds is selected as to give the desired, for example synergistic, action. In general, the weight ratio would vary depending on the specific active ingredient and how many active ingredients are present in the combination. Generally, in the event the combination consists of three active ingredients the weight ratio between any two ingredients, independently of each other, is from 100:1 to 1:100, including from 99:1, 98:2, 97:3, 96:4, 95:5, 94:6, 93:7, 92:8, 91:9, 90:10, 89:11, 88:12, 87:13, 86:14, 85:15, 84:16, 83:17, 82:18, 81:19, 80:20, 79:21, 78:22, 77:23, 76:24, 75:25, 74:26, 73:27, 72:28, 71:29, 70:30, 69:31, 68:32, 67:33, 66:34, 65:45, 64:46, 63:47, 62:48, 61:49, 60:40, 59:41, 58:42, 57:43, 56:44, 55:45, 54:46, 53:47, 52:48, 51:49, 50:50, 49:51, 48:52, 47:53, 46:54, 45:55, 44:56, 43:57, 42:58, 41:59, 40:60, 39:61, 38:62, 37:63, 36:64, 35:65, 34:66, 33:67, 32:68, 31:69, 30:70, 29:71, 28:72, 27:73, 26:74, 25:75, 24:76, 23:77, 22:78, 21:79, 20:80, 19:81, 18:82, 17:83, 16:84, 15:85, 14:86, 13:87, 12:88, 11:89, 10:90, 9:91, 8:92, 7:93, 6:94, 5:95, 4:96, 3:97, 2:98, to 1:99. Preferred weight ratios between any two components of present invention are preferably from 75:1 to 1:75, more preferably, 50:1 to 1.50, especially 25:1 to 1:25, advantageously 10:1 to 1:10, such as 5:1 to 1:5.

The rates of application (use) of the combination vary, for example, according to type of use, type of crop, the specific active ingredients in the combination, type of plant propagation material (if appropriate), but is such that the active ingredients in the combination are of an effective amount to provide the desired enhanced action (such as disease or pest control) and can be determined by trials.

Generally for foliar or soil treatment, application rates can vary from 0.05 to 3 kg per hectare (g/ha) of active ingredients. Suitable application rates for foliar use are 50 - 1000, preferably 75 - 500, especially 100 - 300, g/ha of component (I); and 50 - 1000, preferably 250 - 750 g/ha of component (II).

Generally for seed treatment, application rates can vary from 0.5 to 1000g / 100kg of seeds of active ingredients. Examples of application rates for seed treatment are tend to be 5 - 100, preferably 10 - 50, especially 12 - 25, g/100kg of seeds of component (I); and 0.5-10, preferably 0.75 - 7, especially 1 - 5, g/100kg of seeds of component (I I).

The components (I) or (II), and any other pesticides, may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the compounds (I) and (II) are in the form of a formulation composition with one or more of customary formulation auxiliaries.

Therefore, the combination of compounds (I) and (II) are normally used in the form of formulations. The compounds (I) and (II) can be applied to the locus where control is desired either simultaneously or in succession at short interval, for example on the same day, if desired together with further carriers, surfactants or other application-promoting adjuvants customarily employed in formulation technology. In a preferred embodiment, (I) and (II) are applied simultaneously.

In the event compounds (I) and (II) are applied simultaneously in the present invention, they may be applied as a composition containing (I), (II), in which case each of (I) and (II) can be obtained from a separate formulation source and mixed together (known as a tank-mix, ready-to-apply, spray broth, or slurry), optionally with other pesticides, or (I) and (II) can be obtained as single formulation mixture source (known as a pre-mix, concentrate, formulated compound (or product)), and optionally mixed together with other pesticides.

In an embodiment, the combination of the present invention is applied as a composition. Accordingly, the present invention is a composition comprising, as active ingredients, (I) and (II), and optionally other pesticides, and optionally one or more customary formulation auxiliaries; which may be in the form of a tank-mix or pre-mix composition.

In a preferred embodiment of the invention, the combination of (I) azoxystrobin, fludioxonil, mefenoxam and thiamethoxam and (II) formononetin or salts or esters thereof; (I) azoxystrobin, fludioxonil, metalaxyl and thiamethoxam and (II) formononetin or salts or esters thereof; (I) azoxystrobin, fludioxonil, mefenoxam, myclobutanil and thiamethoxam and (II) formononetin or salts or esters thereof; (I) azoxystrobin, fludioxonil, mefenoxam, abamectin and thiamethoxam and (II) formononetin or salts or esters thereof; (I) azoxystrobin, fludioxonil, mefenoxam, abamectin, myclobutanil and thiamethoxam and (II) formononetin or salts or esters thereof; (I) fludioxonil, mefenoxam, abamectin and thiamethoxam and (II) formononetin or salts or esters thereof; (I) azoxystrobin, fludioxonil, mefenoxam and (II) formononetin or salts or esters thereof; (I) azoxystrobin, fludioxonil, mefenoxam and imidacloprid and (II) formononetin or salts or esters thereof; (I) azoxystrobin, fludioxonil, metalaxyl and imidacloprid and (II) formononetin or salts or esters thereof; (I) azoxystrobin, fludioxonil, mefenoxam, myclobutanil and imidacloprid and (II) formononetin or salts or esters thereof; (I) azoxystrobin, fludioxonil, mefenoxam, abamectin and imidacloprid and (II) formononetin or salts or esters thereof; (I) azoxystrobin, fludioxonil, mefenoxam and clothianidin and (II) formononetin or salts or esters thereof; (I) azoxystrobin, fludioxonil, metalaxyl and clothianidin and (II) formononetin or salts or esters thereof; (I) azoxystrobin, fludioxonil, mefenoxam, myclobutanil and clothianidin and (II) formononetin or salts or esters thereof; (I) azoxystrobin, fludioxonil, mefenoxam, abamectin and clothianidin and (II) formononetin or salts or esters thereof; (I) thiamethoxam, tebuconazole, and fludioxonil and (II) formononetin or salts or esters thereof; in the form of a pre-mix composition (or mixture) wherein the formononetin is in naturally-occurring or synthetic form.

In a more preferred embodiment of the invention, the combination of (I) mefenoxam and fludioxonil and (II) formononetin; (I) thiabendazole, mefenoxam and fludioxonil, and thiamethoxam and and (II) formononetin; (I) thiabendazole, mefenoxam, azoxystrobin and fludioxonil and and (II) formononetin; and (I) thiabendazole, mefenoxam, azoxystrobin, fludioxonil, and thiamethoxam and (II) formononetin;

Examples of foliar formulation types for pre-mix compositions are:
GR: Granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Generally, a tank-mix formulation for foliar or soil application comprises 0.1 to 20%, especially 0.1 to 15 %, active ingredient compounds, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, active ingredient compounds, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

Using such formulations either straight or diluted plant propagation material can be treated and protected against damage, for example, from pathogen(s), by spraying, pouring or immersing.

The active ingredient combinations according to the invention are distinguished by the fact that they are especially well tolerated by plants and are environmentally friendly.

Each active ingredient combination according to the invention is especially advantageous for the treatment of plant propagation material.

In a preferred embodiment, each of the combinations of the present invention is a plant propagation material, preferably seed, treating composition.

In each aspect and embodiment of the invention, "consisting essentially" and inflections thereof are a preferred embodiment of "comprising" and its inflections, and "consisting of" and inflections thereof are a preferred embodiment of "consisting essentially of and its inflections.

## Claims

1. A pesticidal combination comprising at least two active ingredient components optionally together with one or more customary formulation auxiliaries, wherein component (I) comprises fludioxonil and component (II) comprises formononetin or salts or esters thereof in naturally-occurring or synthetic form.

2. The combination according to claim 1 wherein (I) further comprises one or more of a fungicide, insecticide, nematicide, acaracide, molluscicide, plant growth regulator, or plant activator.

3. The combination according to any one of claims 1 to 2 in the form of a plant propagation material treating pesticidal composition.

4. The combination according to any one of claims 1 to 3 wherein (I) is azoxystrobin, fludioxonil, mefenoxam and thiamethoxam and (II) is formononetin or salts or esters thereof; (I) is azoxystrobin, fludioxonil, metalaxyl and thiamethoxam and (II) is formononetin or salts or esters thereof; (I) is azoxystrobin, fludioxonil, mefenoxam, myclobutanil and thiamethoxam and (II) is formononetin or salts or esters thereof; (I) is azoxystrobin, fludioxonil, mefenoxam, abamectin and thiamethoxam and (II) is formononetin or salts or esters thereof; (I) is azoxystrobin, fludioxonil, mefenoxam, abamectin, myclobutanil and thiamethoxam and (II) is formononetin or salts or esters thereof; (I) is fludioxonil, mefenoxam, abamectin and thiamethoxam and (II) is formononetin or salts or esters thereof; (I) is azoxystrobin, fludioxonil, mefenoxam and (II) is formononetin or salts or esters thereof; (I) is azoxystrobin, fludioxonil, mefenoxam and imidacloprid and (II) is formononetin or salts or esters thereof; (I) is azoxystrobin, fludioxonil, metalaxyl and imidacloprid and (II) is formononetin or salts or esters thereof; (I) is azoxystrobin, fludioxonil, mefenoxam, myclobutanil and imidacloprid and (II) is formononetin or salts or esters thereof; (I) is azoxystrobin, fludioxonil, mefenoxam, abamectin and imidacloprid and (II) is formononetin or salts or esters thereof; (I) is azoxystrobin, fludioxonil, mefenoxam and clothianidin and (II) is formononetin or salts or esters thereof; (I) is azoxystrobin, fludioxonil, metalaxyl and clothianidin and (II) is formononetin or salts or esters thereof; (I) is azoxystrobin, fludioxonil, mefenoxam, myclobutanil and clothianidin and (II) is formononetin or salts or esters thereof; (I) is azoxystrobin, fludioxonil, mefenoxam, abamectin and clothianidin and (II) is formononetin or salts or esters thereof; (I) is thiamethoxam, tebuconazole, and fludioxonil and (II) is formononetin or salts or esters thereof.

5. A method of controlling or preventing pathogenic damage or pest damage in a plant propagation material, a plant, parts of a plant and/or plant organs that grow at a later point in time, which comprises applying on the plant, part of the plant, or surroundings thereof the combination, as defined in any one of claims 1 to 4.

6. A method of protecting a plant propagation material, a plant, parts of a plant and/or plant organs that grow at a later point in time against pathogenic damage or pest damage by applying to the plant, parts of plant, or their surroundings the combination, as defined in any one of claims 1 to 4.

7. A method of improving the growing characterictics of a plant, which comprises applying to the plant, and/or parts of plant the combination, as defined in any one of claims 1 to 4.

8. The method according to any one of claims 5 to 7, wherein (I) and (II), as defined in any one of claims 1 to 4, are applied simultanesously.

9. The method according to any one of claims 5 to 8, wherein the combination, as defined in any one of claims 1 to 4, is applied on plant propagation material.

10. A method according to any one of claims 5-9, wherein the plant propagation material is a seed.

11. A method according to any one of claims 5-9, wherein the plant propagation material is seed of cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers, canola); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers).

12. Plant propagation material on which the combination defined in any one of claims 1 to 4 is adhered.

13. Plant propagation material according to claim 12, which is seed of cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers, canola); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers).

## Patentansprüche

1. Pestizide Kombination, umfassend mindestens zwei Wirkstoffbestandteile, gegebenenfalls gemeinsam mit einem oder mehreren üblichen Formulierungshilfsstoffen, wobei die Komponente (I) Fludioxonil umfasst und die Komponente (II) Formononetin oder Salze oder Ester davon in natürlich vorkommender oder synthetischer Form umfasst.

2. Kombination nach Anspruch 1, wobei (I) weiterhin eines oder mehrere der Folgenden umfasst: Fungizid, Insektizid, Nematizid, Akarizid, Molluskizid, Pflanzenwachstumsregulator oder Pflanzenaktivator.

3. Kombination nach einem der Ansprüche 1 bis 2 in Form einer pestiziden Zusammensetzung, mit der pflanzliches Vermehrungsmaterial behandelt wird.

4. Kombination nach einem der Ansprüche 1 bis 3, wobei es sich bei (I) um Azoxystrobin, Fludioxonil, Mefenoxam und Thiamethoxam und bei (II) um Formononetin oder Salze oder Ester davon handelt; es sich bei (I) um Azoxystrobin, Fludioxonil, Metalaxyl und Thiamethoxam und bei (II) um Formononetin oder Salze oder Ester davon handelt; es sich bei (I) um Azoxystrobin, Fludioxonil, Mefenoxam, Myclobutanil und Thiamethoxam und bei (II) um Formononetin oder Salze oder Ester davon handelt; es sich bei (I) um Azoxystrobin, Fludioxonil, Mefenoxam, Abamectin und Thiamethoxam und bei (II) um Formononetin oder Salze oder Ester davon handelt; es sich bei (I) um Azoxystrobin, Fludioxonil, Mefenoxam, Abamectin, Myclobutanil und Thiamethoxam und bei (II) um Formononetin oder Salze oder Ester davon handelt; es sich bei (I) um Fludioxonil, Mefenoxam, Abamectin und Thiamethoxam und bei (II) um Formononetin oder Salze oder Ester davon handelt; es sich bei (I) um Azoxystrobin, Fludioxonil, Mefenoxam und bei (II) um Formononetin oder Salze oder Ester davon handelt; es sich bei (I) um Azoxystrobin, Fludioxonil, Mefenoxam und Imidacloprid und bei (II) um Formononetin oder Salze oder Ester davon handelt; es sich bei (I) um Azoxystrobin, Fludioxonil, Metalaxyl und Imidacloprid und bei (II) um Formononetin oder Salze oder Ester davon handelt; es sich bei (I) um Azoxystrobin, Fludioxonil, Mefenoxam, Myclobutanil und Imidacloprid und bei (II) um Formononetin oder Salze oder Ester davon handelt; es sich bei (I) um Azoxystrobin, Fludioxonil, Mefenoxam, Abamectin und Imidacloprid und bei (II) um Formononetin oder Salze oder Ester davon handelt; es sich bei (I) um Azoxystrobin, Fludioxonil, Mefenoxam und Clothianidin und bei (II) um Formononetin oder Salze oder Ester davon handelt; es sich bei (I) um Azoxystrobin, Fludioxonil, Metalaxyl und Clothianidin und bei (II) um Formononetin oder Salze oder Ester davon handelt; es sich bei (I) um Azoxystrobin, Fludioxonil, Mefenoxam, Myclobutanil und Clothianidin und bei (II) um Formononetin oder Salze oder Ester davon handelt; es sich bei (I) um Azoxystrobin, Fludioxonil, Mefenoxam, Abamectin und Clothianidin und bei (II) um Formononetin oder Salze oder Ester davon handelt; es sich bei (I) um Thiamethoxam, Tebuconazol und Fludioxonil und bei (II) um Formononetin oder Salze oder Ester davon handelt.

5. Verfahren zum Bekämpfen von oder Vorbeugen gegen durch Pathogene oder durch Schädlinge verursachten Schaden in einem pflanzlichen Vermehrungsmaterial, einer Pflanze, Teilen einer Pflanze und/oder Pflanzenorganen, die zu einem späteren Zeitpunkt hinzuwachsen, bei dem man auf die Pflanze, den Teil der Pflanze oder die Umgebung davon die Kombination wie in einem der Ansprüche 1 bis 4 appliziert.

6. Verfahren zum Schützen eines pflanzlichen Vermehrungsmaterials, einer Pflanze, von Teilen einer Pflanze und/oder von Pflanzenorganen, die zu einem späteren Zeitpunkt hinzuwachsen, gegen durch Pathogene oder durch Schädlinge verursachten Schaden durch Applizieren der Kombination wie in einem der Ansprüche 1 bis 4 definiert auf die Pflanze, Teile der Pflanze oder ihre Umgebung.

7. Verfahren zum Verbessern der Wuchseigenschaften einer Pflanze, bei dem man auf die Pflanze und/oder Teile der Pflanze die Kombination wie in einem der Ansprüche 1 bis 4 definiert appliziert.

8. Verfahren nach einem der Ansprüche 5 bis 7, wobei (I) und (II) wie in einem der Ansprüche 1 bis 4 definiert gleichzeitig appliziert werden.

9. Verfahren nach einem der Ansprüche 5 bis 8, wobei die Kombination wie in einem der Ansprüche 1 bis 4 definiert auf pflanzliches Vermehrungsmaterial appliziert wird.

10. Verfahren nach einem der Ansprüche 5-9, wobei es sich bei dem pflanzlichen Vermehrungsmaterial um einen Samen handelt.

11. Verfahren nach einem der Ansprüche 5-9, wobei es sich bei dem pflanzlichen Vermehrungsmaterial um Samen von Getreide (Weizen, Gerste, Roggen, Hafer, Mais, Reis, Sorghum, Triticale und verwandte Kulturen); Rüben (Zuckerrübe und Futterrübe); Leguminosen (Bohnen, Linsen, Erbsen, Sojabohnen); Ölpflanzen (Raps, Senf, Sonnenblumen, Canola); Gurkenpflanzen (Zucchini/Kürbis, Gurken, Melonen); Faserpflanzen (Baumwolle, Flachs, Hanf, Jute); Gemüse (Spinat, Salat, Spargel, Kohlgewächse, Karotten, Zwiebeln, Tomaten, Kartoffeln, Paprika); sowie Zierpflanzen (Blumen, Sträucher, Laubbäume und immergrüne Pflanzen wie Koniferen) handelt.

12. Pflanzliches Vermehrungsmaterial, an dem die Kombination wie in einem der Ansprüche 1 bis 4 definiert haftet.

13. Pflanzliches Vermehrungsmaterial nach Anspruch 12, bei dem es sich um Samen von Getreide (Weizen, Gerste, Roggen, Hafer, Mais, Reis, Sorghum, Triticale und verwandte Kulturen); Rüben (Zuckerrübe und Futterrübe); Leguminosen (Bohnen, Linsen, Erbsen, Sojabohnen); Ölpflanzen (Raps, Senf, Sonnenblumen, Canola); Gurkenpflanzen (Zucchini/Kürbis, Gurken, Melonen); Faserpflanzen (Baumwolle, Flachs, Hanf, Jute); Gemüse (Spinat, Salat, Spargel, Kohlgewächse, Karotten, Zwiebeln, Tomaten, Kartoffeln, Paprika); sowie Zierpflanzen (Blumen, Sträucher, Laubbäume und immergrüne Pflanzen wie Koniferen) handelt.

## Revendications

1. Combinaison pesticide comprenant au moins deux composants de substance active facultativement conjointement avec un ou plusieurs auxiliaires de formulation usuels, dans laquelle le composant (I) comprend le fludioxonil et le composant (II) comprend la formononétine ou des sels ou esters de celle-ci sous une forme d'origine naturelle ou synthétique.

2. Combinaison selon la revendication 1 dans laquelle (I) comprend en outre l'un ou plusieurs d'un fongicide, un insecticide, un nématicide, un acaricide, un molluscicide, un régulateur de croissance de plante, ou un activateur de plante.

3. Combinaison selon l'une quelconque des revendications 1 à 2 sous la forme d'une composition pesticide de traitement de matériau de propagation de plante.

4. Combinaison selon l'une quelconque des revendications 1 à 3 dans laquelle (I) est l'azoxystrobine, le fludioxonil, le méfénoxam et le thiaméthoxam et (II) est la formononétine ou des sels ou esters de celle-ci ; (I) est l'azoxystrobine, le fludioxonil, le métalaxyl et le thiaméthoxam et (II) est la formononétine ou des sels ou des esters de celle-ci ; (I) est l'azoxystrobine, le fludioxonil, le méfénoxam, le myclobutanol et le thiaméthoxam et (II) est la formononétine ou des sels ou esters de celle-ci ; (I) est l'azoxystrobine, le fludioxonil, le méfénoxam, l'abamectine et le thiaméthoxam et (II) est la formononétine ou des sels ou esters de celle-ci ; (I) est l'azoxystrobine, le fludioxonil, le méfénoxam, l'abamectine,, le myclobutanol, et le thiaméthoxam et (II) est la formononétine ou des sels ou esters de celle-ci ; (I) est le fludioxonil, le méfénoxam, l'abamectine et le thiaméthoxam et (II) est la formononétine ou des sels ou esters de celle-ci ; (I) est l'azoxystrobine, le fludioxonil, le méfénoxam et (II) est la formononétine ou des sels ou esters de celle-ci ; (I) est l'azoxystrobine, le fludioxonil, le méfénoxam et l'imidacloprid et (II) est la formononétine ou des sels ou esters de celle-ci ; (I) est l'azoxystrobine, le fludioxonil, le métalaxyl et l'imidacloprid et (II) est la formononétine ou des sels ou esters de celle-ci ; (I) est l'azoxystrobine, le fludioxonil, le méfénoxam, le myclobutanol et l'imidacloprid et (II) est la formononétine ou des sels ou esters de celle-ci ; (I) est l'azoxystrobine, le fludioxonil, le méfénoxam, l'abamectine et l'imidacloprid et (II) est la formononétine ou des sels ou esters de celle-ci ; (I) est l'azoxystrobine, le fludioxonil, le méfénoxam et la clothianidine et (II) est la formononétine ou des sels ou esters de celle-ci ; (I) est l'azoxystrobine, le fludioxonil, le métalaxyl et la clothianidine et (II) est la formononétine ou des sels ou esters de celle-ci ; (I) est l'azoxystrobine, le fludioxonil, le méfénoxam, le myclobutanol et la clothianidine et (II) est la formononétine ou des sels ou esters de celle-ci ; (I) est l'azoxystrobine, le fludioxonil, le méfénoxam, l'abamectine et la clothianidine et (II) est la formononétine ou des sels ou esters de celle-ci ; (I) est le thiaméthoxam, le tébuconazole, et le fludioxonil et (II) est la formononétine ou des sels ou esters de celle-ci.

5. Procédé de contrôle ou de prévention des dommages dus à des agents pathogènes ou des dommages dus à des organismes nuisibles dans un matériau de propagation de plante, une plante, des parties d'une plante et/ou des organes de plante qui croissent à un point ultérieur dans le temps, qui comprend l'application sur la plante, une partie de la plante, ou les environs de celle-ci de la combinaison, telle que définie dans l'une quelconque des revendications 1 à 4.

6. Procédé de protection d'un matériau de propagation de plante, une plante, des parties d'une plante et/ou des organes de plante qui croissent à un temps ultérieur contre les dommages dus à des agents pathogènes ou les dommages dus à des organismes nuisibles par application sur la plante, des parties de la plante, ou les environs de celle-ci de la combinaison, telle que définie dans l'une quelconque des revendications 1 à 4.

7. Procédé d'amélioration des caractéristiques de croissance d'une plante, qui comprend l'application sur la plante, et/ou des parties de plante de la combinaison, telle que définie dans l'une quelconque des revendications 1 à 4.

8. Procédé selon l'une quelconque des revendications 5 à 7, dans lequel (I) et (II), tels que définis dans l'une quelconque des revendications 1 à 4, sont appliqués simultanément.

9. Procédé selon l'une quelconque des revendications 5 à 8, dans lequel la combinaison, telle que définie dans l'une quelconque des revendications 1 à 4, est appliquée sur un matériau de propagation de plante.

10. Procédé selon l'une quelconque des revendications 5 à 9, dans lequel le matériau de propagation de plante est une graine.

11. Procédé selon l'une quelconque des revendications 5 à 9, dans lequel le matériau de propagation de plante est une graine de céréales (blé, orge, seigle, avoine, maïs, riz, sorgho, triticale et cultures apparentées) ; betterave (betterave sucrière et betterave fourragère) ; plantes légumineuses (fèves, lentilles, pois, soja) ; plantes oléagineuses (colza, moutarde, tournesols, canola) ; plantes cucurbitacées (courges, concombres, melons) ; plantes à fibres (coton, lin, chanvre, jute) ; légumes (épinard, laitue, asperge, choux, carottes, oignons, tomates, pommes de terre, paprika) ; ainsi que des plantes d'ornement (fleurs, arbustes, arbres à feuilles larges et plantes sempervirentes, telles que les conifères).

12. Matériau de propagation de plante sur lequel la combinaison définie dans l'une quelconque des revendications 1 à 4 est adhérée.

13. Matériau de propagation de plante selon la revendication 12, qui est une graine de céréales (blé, orge, seigle, avoine, maïs, riz, sorgho, triticale et cultures apparentées) ; betterave (betterave sucrière et betterave fourragère) ; plantes légumineuses (fèves, lentilles, pois, soja) ; plantes oléagineuses (colza, moutarde, tournesols, canola) ; plantes cucurbitacées (courges, concombres, melons) ; plantes à fibres (coton, lin, chanvre, jute) ; légumes (épinard, laitue, asperge, choux, carottes, oignons, tomates, pommes de terre, paprika) ; ainsi que des plantes d'ornement (fleurs, arbustes, arbres à feuilles larges et plantes sempervirentes, telles que les conifères).
